# EUROPÄISCHE PATENTSCHRIFT

(11) **EP 1 720 970 B1**
(45) Veröffentlichungstag und Bekanntmachung des Hinweises auf die Patenterteilung: **03.10.2018**
(21) Anmeldenummer: 05706535.1
(22) Anmeldetag: 01.03.2005
(51) Int. Cl.: C12C 1/15, C12C 1/02, C12C 1/027

(54) **VORRICHTUNG ZUM WEICHEN VON GERSTE**
DEVICE FOR SOFTENING GRAIN
DISPOSITIF POUR FAIRE TREMPER DE L'ORGE

(30) Priorität: 01.03.2004 NL 1025609
(43) Veröffentlichungstag der Anmeldung: 15.11.2006
(73) Patentinhaber: Bühler AG, 9240 Uzwil (CH)
(72) Erfinder: VAN DIEREN, Bernardus, NL-5491 KE St. Oedenrode (NL); TOONEN, Gerardus, NL-5454 NZ St. Hubert (NL)
(74) Vertreter: Vossius & Partner Patentanwälte Rechtsanwälte mbB
(86) Internationale Anmeldenummer: PCT/CH2005/000116
(87) Internationale Veröffentlichungsnummer: WO 2005/083050

(56) Entgegenhaltungen:
- EP-A- 0 141 907
- EP-A- 0 471 143
- EP-A- 0 714 979
- DE-A1- 1 517 789
- DE-A1- 1 642 651
- DE-A1- 1 917 972
- DE-A1- 2 523 709
- GB-A- 1 538 177

## Beschreibung

Die vorliegende Erfindung betrifft einen Behälter für zu weichende Gerste mit einem Boden, in dem Durchgänge zum Durchführen von Wasser zwischen der Unterseite des Bodens und der zu weichenden Gerste im Behälter vorgesehen sind.

Wie dem Fachmann bekannt ist, ist es zum Brauen von Bier notwendig, dass Gerste vorangehend an den Malzprozess, wobei die Gerstenkörner mehr oder weniger bewegt werden, um zu keimen, gereinigt und geweicht wird. Es ist dabei bekannt, einen sogenannten flachen Weichbottich, der mit einem doppelten flachen Boden versehen ist, zu verwenden. Der oberste Boden des doppelten Bodens ist dabei perforiert, wobei die Perforationsdurchgänge derartig klein sind, dass Gerstenkörner, die von oben auf den obersten Boden des doppelten Bodens gebracht werden, nicht durch diese Perforationsdurchgänge fallen können. Der Abstand zwischen den beiden Böden des doppelten Bodens beträgt normalerweise mindestens etwa 80 cm.

Während des Reinigens und Weichens von Gerste im bekannten flachen Weichbottich wird die Gerste in den Bottich auf den obersten Boden des doppelten Bodens gebracht. Im Weichbottich wird die Gerste einer Behandlung unterzogen, die hauptsächlich aus zwei sich abwechselnden und sich wiederholenden Phasen besteht. Während der ersten Phase wird der Gerste Wasser über den doppelten Boden zugeführt, wobei nicht nur die Gerste, sondern auch der doppelte Boden unter Wasser gesetzt wird. Diese Phase, auch Nassweichphase genannt, dauert üblicherweise etwa 2 bis 5 Stunden. Während der auf die Nassweichphase anschliessenden zweiten Phase, auch Trockenweichphase genannt, die allgemein etwa 10 Stunden dauert, lässt man das Wasser aus dem Weichbottich ablaufen, wobei das Wasser, insoweit sich dieses während der Nassweichphase über dem obersten Boden des doppelten Bodens befand, durch die Perforationen des obersten Bodens des doppelten Bodens fliesst.

Während des Weichens steigt der Feuchtigkeitsgehalt in den (lebenden) Körnern, wodurch sich die Umwandlungen in den Körnern, notwendig für die Instandhaltung des Lebens, beschleunigen. Bei diesen Umwandlungen werden unter anderem Stärkeverbindungen enzymatisch in Wasser und Kohlenstoffdioxyd umgewandelt, wofür zusätzlicher Sauerstoff aus der Umgebung notwendig ist. Während der Nassweichphase wird mittels Belüftung des Wassers Sauerstoff zugeführt und Kohlenstoffdioxyd vertrieben. Während der Trockenweichphase wird die Luft zwischen den Körnern durch Belüftung aufgefrischt, wodurch Kohlenstoffdioxyd vertrieben wird und Sauerstoff zugeführt wird.

Ein wichtiger Einwand, der mit der Anwendung eines flachen Weichbottichs mit einem doppelten Boden verbunden ist, ist der, dass der Wasserverbrauch wesentlich ist, indem der doppelte Boden während der Nassweichphase notwendigerweise mit Wasser gefüllt wird. Typische Mengen, die dabei eine Rolle spielen, sind, dass der doppelte Boden mit etwa 300 m³ Wasser gefüllt wird (Faustregel: etwa 0,7m³ pro m² Weichbottichfläche) während über dem obersten Boden des doppelten Bodens etwa 450 m³ Wasser (Faustregel: etwa 1 m³ pro Tonne Gerste) während der Nassweichphase vorhanden ist. Die Möglichkeiten, um die Höhe des doppelten Bodens zu verringern, sind beschränkt, da eine Mindesthöhe gefordert wird, um in einem ausreichenden Mass das Kohlenstoffdioxyd aus der Masse von Gerstenkörnern während der Durchweichphase absaugen zu können. Ein anderer wichtiger Einwand, der mit der Anwendung der bekannten flachen Weichbottiche verbunden ist, ist, dass deren Reinigung im Zeitraum, in dem im flachen Weichbottich keine Gerstenkörner vorhanden sind, sehr zeitraubend und arbeitsintensiv ist und das Risiko besteht, dass trotzdem unerwünschte Verschmutzungen zurückbleiben was aufgrund der Art des Endprodukts, nämlich Bier, unerwünscht ist.

In der DE-A-1917972 ist eine Anlage zur Herstellung von Malz in Kästen offenbart, bei der Wasser und Luft bildet dabei einen durchgehenden Hohlraum unterhalb des Bodens.

Die EP-A-0141907 zeigt eine Vorrichtung zum Waschen und Weichen von Braugetreide mit grossen Wassermengen in einer Waschtrommel. Auf die Waschtrommel folgt eine Horde mit einem perforierten Boden und einem darunter befindlichen, durchgehendem Becken. Dieses Becken kann bis oberhalb der Füllhöhe des zu weichenden Getreides geflutet werden.

Die DE-A-1642651 beschreibt eine Keimvorrichtung für Gerste, bei der Leitungen zur Durchleitung von Wasser durch den Boden angeordnet sind. Auch hier befindet sich unterhalb des Bodens ein durchgehender Hohlraum, der eine globale Flutung der Keimvorrichtung bis oberhalb der Füllhöhe ermöglicht.

Bei einer weiteren Einrichtung zum Mälzen von Getreide gemäss DE-A-1517789 ist ebenfalls unterhalb des perforierten Bodens ein Hohlraum angeordnet, dem Wasser zugeführt werden kann, bis ein gewünschter Füllstand erreicht ist oder es kann auch Luft gleichmässig durch die Perforation des Bodens in das Getreide geführt werden.

Die Erfindung beabsichtigt nun für die oben beschriebene Problematik eine Lösung oder jedenfalls Verbesserung zu bieten. Dazu kennzeichnet sich die erfindungsgemässe Vorrichtung dadurch, dass unter dem Boden ein Wasserleitungsnetz direkt an Durchgänge zum Durchführen von Wasser über diese Durchgänge anschliesst, wobei die Vorrichtung keinen doppelten Boden aufweist. Durch Verwendung eines solchen Wasserleitungsnetzwerks ist es nicht mehr notwendig, einen doppelten Boden zu verwenden, der während der Nassweichphase mit Wasser gefüllt werden muss. Somit kann eine wesentliche Einsparung des Wasserverbrauchs realisiert werden.

Um die Funktionalität des Wasserleitungswerks zu vergrössern, wird bevorzugt, dass das Wasserleitungswerk für die Ableitung von Wasser über die Durchgänge ab der zu weichenden Gerste eingerichtet ist.

Alternativ oder in Kombination ist bevorzugt, dass das Wasserleitungswerk für das Zuführen von Wasser über die Durchgänge zu der zu weichenden Gerste über die Durchgänge ab der Unterseite des Bodens eingerichtet ist.

Um das Wasserleitungswerk nicht zu komplex zu gestalten, ist es erwünscht, die Anzahl an Durchgängen, über welche Wasser durchgeführt wird, ab oder zu der zu weichenden Gerste zu beschränken, wozu es erforderlich ist, den Durchgängen eine durchfliessende Oberfläche zu geben, die in wichtigem Masse grösser ist als die durchfliessende Oberfläche der Perforationsdurchgänge im obersten Boden des doppelten Bodens des flachen Weichbottichs gemäss des Standes der Technik. Dabei werden Durchgänge mit einer durchfliessenden Fläche von mindestens 50 cm² und weiter von mindestens 100 cm² bevorzugt. Um nun zu vermeiden, dass Gerstenkörner diese Durchgänge passieren, sollten die Durchgänge vorzugsweise mit Sieborganen versehen sein.

Der Behälter hat vorzugsweise in der Obenansicht eine runde Kopfform, wobei die Durchgänge in radial orientierten Reihen angeordnet sind. Die Vorteile, die damit verbunden sind, sind vor allem konstruktiver Art.

Um die Gerstenkörner im Behälter möglichst homogen der Tätigkeit des Wassers, das durch die Durchgänge geführt wird zu unterziehen wird bevorzugt, dass die Durchgänge hauptsächlich gleich über die Fläche des Bodens verteilt sind. Wegen abweichenden Verhaltens nahe den Umfangsrändern des Bodens kann diese allgemeine Regel nahe dem Umfangsrand nicht oder wenigstens in geringerem Ausmass zutreffend sein. Daneben gilt als Vorteil einer gleichmässigen Verteilung der Durchgänge über die Fläche des Bodens, dass falls, wie nachfolgend noch weiter erläutert wird, diese Durchgänge auch zum Belüften der Gerstenkörner benützt werden, die Gerstenkörner mit einer Mindestmenge an Durchgängen in Bewegung gebracht werden können, wodurch ein waschender, Schmutz abführender und Druck ausgleichender Effekt geschaffen wird. Die Bewegung der Gerstenkörner wird gerade über den Durchgängen senkrecht nach oben gerichtet sein, während auf einigen radialen Abstand der Durchgänge, zum Beispiel auf einen radialen Abstand gelegen zwischen 20 und 50 Zentimetern, ein abwärtsgehender Fluss von Gerstenkörnern erhalten wird, wodurch ein mehr oder weniger torusförmiges Bewegungsmuster erhalten wird, wobei die Gerstenkörner ständig zirkuliert werden. Ein solches Bewegungsmuster wird auch mit dem Begriff umwälzender Effekt bezeichnet. Wie bereits angegeben, ist dabei die Anzahl von Durchgängen zu beschränken, wobei zwischen der durchfliessenden Fläche der Durchgänge, der Dichte der Durchgänge auf dem Boden und dem umwälzenden Effekt ein Kompromiss gefunden werden muss. Vorzugsweise ist die Dichte der Durchgänge auf dem Boden kleiner als 10 oder weiter vorzugsweise kleiner als 5 Durchgänge pro m². Um die homogene Verteilung bei der Anwendung von radial orientierten Reihen möglichst gut zu erreichen, auch nahe dem Mittelpunkt der runden Kopfform, ist es bevorzugt, dass angrenzende radial orientierte Reihen eine unterschiedliche Länge aufweisen.

Sehr bevorzugt ist, dass das Wasserleitungswerk unter dem Boden mit einer Reihe von gemeinsamen Wasserleitungselementen und mit Wasser-Abzweigungsleitungselementen zwischen einem gemeinsamen Wasserleitungselement und einem Durchgang versehen ist. Somit wird die benötigte Rohrlänge für das Wasserleitungswerk beschränkt.

Bei Anwendung von radial orientierten Reihen von Durchgängen ist bevorzugt, dass die gemeinsamen Wasserleitungselementen radial orientiert sind, so dass die Orientierung der Reihen, Durchgänge und der gemeinsamen Wasserleitungselemente miteinander übereinstimmen und die Wasserabzweigleitungselemente dazwischen im wesentlichen einheitlich ausgeführt sein können.

Dabei wird weiter bevorzugt, dass die gemeinsamen Wasserleitungselemente in Obenansicht zwischen zwei angrenzenden radial orientierten Reihen von Durchgängen angeordnet sind, so dass der Anschluss der Wasserabzweigleitungselemente an einem Ende auf die Durchgänge der beiden angrenzenden radial orientierten Reihen anschliessen können und an ihrem gegenüberliegenden Ende an dasselbe gemeinsame Wasserleitungselement anschliessen können.

Weiter wird bevorzugt, dass, ebenfalls zur Beschränkung der Menge von Rohrlänge notwendig für das Wasserleitungswerk, eine Anzahl von gemeinsamen Wasserleitungselementen auf ein Wasserhauptleitungselement anschliessen.

Ein wichtiger Vorteil für die Einfachheit, mit den zwischenzeitlich eine Reinigung der Vorrichtung stattfinden kann, wird erreicht, indem ein Behälter für Reinigungsmittel vorgesehen ist, der über ein Reinigungsmittelabsperrorgan mit dem Wasserleitungsnetzwerk in Verbindung steht, um auf Wunsch dem Wasserleitungsnetzwerk Reinigungsmittel zuzufügen. Dabei muss man bedenken, dass die Menge Wasser, die das Wasserleitungswerk enthalten kann, viele Male kleiner ist als das Volumen des doppelten Bodens des flachen Weichbottichs gemäss dem Stand der Technik. Wie bereits angeführt, beträgt das letztgenannte Volumen in der Regel 300 m³, dort wo ein typisches Volumen für das Innere des Wasserleitungswerks 5 m³ beträgt, wodurch die Anwendung eines Behälters für Reinigungsmittel, mit dem tatsächlich der sogenannte Clean-in-Place-Prozess durchgeführt werden kann, zu den Möglichkeiten gehört. Ausserdem gilt, dass durch die Anwendung eines Wasserleitungswerks innerhalb des Wasserleitungswerks viel höhere Fliessgeschwindigkeiten erreicht werden können, wodurch auch schon eine verbesserte reinigende Wirkung entsteht.

Es bietet ebenfalls sehr grosse Vorteile, wenn unter dem Boden ein Kohlenstoffdioxydleitungswerk direkt an die Durchgänge anschliesst zum Abführen von Kohlenstoffdioxyd von der zu weichenden Gerste über diese Durchgänge. Obwohl diese Durchgänge im Prinzip andere Durchgänge betreffen können als die Durchgänge, die zum Zuführen von Wasser ab dem Wasserleitungswerk zu der zu weichenden Gerste angewendet werden (wobei, falls erforderlich die Abmessungen und die Mengen der Durchgänge für das Kohlenstoffdioxyd und der Durchgänge für das Wasser voneinander abweichen können), ist es dabei bevorzugt, dass zum Zuführen (und eventuell zum Abführen) von Wasser dieselben Durchgänge verwendet werden wie zum Absaugen des Kohlenstoffdioxyds aus der Gerstenmasse während der Trockenweichphase.

Zur Beschränkung der erforderlichen Rohrlänge zum Realisieren des Kohlenstoffdioxydleitungswerkes ist dieses vorzugsweise unter dem Boden mit einer Anzahl von gemeinsamen Kohlenstoffdioxydleitungselementen und Kohlenstoffdioxydabzweigleitungselementen zwischen einem gemeinsamen Kohlenstoffdioxydleitungselement und einem Durchgang versehen. Die Vorteile eines einem Durchgang versehen. Die Vorteile eines gemeinsamen Kohlenstoffdioxydleitungselements und Kohlenstoffdioxydabzweigleitungselementen sind mit der Anwendung von gemeinsamen Wasserleitungselementen und von Wasserabzweigleitungselementen vergleichbar.

Aus demselben Gesichtspunkt ist es weiter bevorzugt, dass eine Anzahl von gemeinsamen Kohlenstoffdioxydleitungselementen an ein Kohlenstoffdioxydhauptleitungselement anschliesst. Durch den Anschluss dieses Kohlenstoffdioxydhauptleitungselement an eine Vakuumquelle kann innerhalb des gesamten Kohlenstoffdioxydleitungswerks ein herabgesetzter Druck zum Absaugen des Kohlenstoffdioxyds über die entsprechenden Durchgänge geschaffen werden.

Eine effiziente Verwendung der angewendeten Leitungselemente wird erreicht, indem die gemeinsamen Wasserleitungselemente und die gemeinsamen Kohlenstoffdioxydleitungselemente mindestens zum Teil von denselben gemeinsamen Leitungselementen gebildet werden.

Ein gleicher Vorteil ist zutreffend, wenn die Wasserabzweigleitungselemente und die Kohlenstoffdioxydabzweigleitungselemente zumindest zum Teil von denselben Abzweigleitungselementen gebildet werden. Die Anwendung derselben Abzweigleitungselemente für sowohl das Zuführen (und eventuell das Abführen) von Wasser als auch das Abführen von Kohlenstoffdioxyd ist möglich, da das Zuführen (oder Abführen) von Wasser nicht gleichzeitig mit dem Abführen des Kohlenstoffdioxyds stattfindet.

Um nun zu vermeiden, dass bei Anwendung von gemeinsamen Leitungselementen unerwünscht Kohlenstoffdioxyd in die Wasserhauptleitungselemente gerät, ist bevorzugt, dass zwischen den gemeinsamen Leitungselementen und dem Wasserhauptleitungselement Wasserabsperrorgane vorgesehen sind.

Aus einem vergleichbaren Grund, nämlich der Vermeidung des Eindringens von Wasser in das Kohlenstoffdioxydhauptleitungselement ist es bevorzugt, dass zwischen den gemeinsamen Leitungselementen und dem Kohlenstoffdioxydhauptleitungselement Kohlenstoffdioxydabsperrorgane vorgesehen sind.

Es ist ebenfalls sehr bevorzugt, dass unter dem Boden ein Luftleitungswerk an die Durchgänge anschliesst, um der zu weichenden Gerste Luft über diese Durchgänge zuzuführen. Wie bei den Durchgängen für das Kohlenstoffdioxyd gilt wieder, dass die Durchgänge für die Luft (oder Sauerstoff) im Prinzip andere Durchgänge sein können als die Durchgänge für das Durchführen von Wasser und demzufolge auch abweichen könnten was die Anzahl und deren Abmessungen betrifft, dass aber vorzugsweise die Durchgänge bestimmt für das Zuführen von Luft zur Gerste dieselben sind wie die Durchgänge für das Durchführen von Wasser und/oder die Durchgänge für das Abführen von Kohlenstoffdioxyd.

Zur Beschränkung der benötigten Rohrlänge zum Realisieren des Luftleitungswerks ist das Luftleitungswerk vorzugsweise mit einer Anzahl von gemeinsamen Luftleitungselementen und mit Luftabzweigleitungselementen zwischen einem gemeinsamen Luftleitungselement und einem Durchgang versehen. Daneben wird es innerhalb dieses Rahmens bevorzugt, dass eine Anzahl von gemeinsamen Luftleitungselementen an ein Lufthauptleitungselement anschliessen. Indem das Lufthauptleitungselement an einen Kompressor oder ähnliches angeschlossen ist, kann innerhalb des Luftleitungswerks ein erhöhter Druck realisiert werden, um der zu weichenden Gerste Luft zuzuführen.

Um gruppenweise Durchgänge für Luft vorsehen zu können, ist bevorzugt, dass zwischen den gemeinsamen Luftleitungselementen und dem Lufthauptleitungselement Luftabsperrorgane vorgesehen sind.

Dabei ist es vorteilhaft, dass ein Steuerungssystem vorgesehen ist, das sich für die individuelle oder gruppenweise Bedienung von verschiedenen Luftabsperrorganen eignet.

Zum Entfernen von Verschmutzungen oder dergleichen, die auf dem Wasser im Behälter treiben, ist bevorzugt, dass der Behälter nahe dessen Oberseite mit einem Abschaborgan versehen ist, um während der Verlagerung des Abschaborgans in eine Verlagerungsrichtung entlang der Oberfläche des Wassers auf dem Wasser treibende Elemente abzuschaben.

Um zu fördern, dass unerwünschte Teilchen wie Verschmutzungen sich zur Oberfläche des Wassers im Behälter verlagern, kann dies durch das Zuführen von Luft über die Durchgänge für die Luftzufuhr zu stimuliert werden. Da das Abschaborgan nur direkt an dessen Vorderseite wirksam ist, ist eine weitere bevorzugte Ausführungsform der erfindungsgemässen Vorrichtung dadurch gekennzeichnet, dass das Steuerungssystem sich für das Öffnen einer oder einer Anzahl von Luftabsperrorganen eignet, die sich in Obenansicht in der Verlagerungsrichtung an der Vorderseite des Abschaborgans befinden.

Die Erfindung wird anhand der Beschreibung einer bevorzugten Ausführungsform einer erfindungsgemässen Weichvorrichtung unter Verweisung auf die nachfolgenden Figuren näher erläutert:
- Figur 1: zeigt eine Perspektivansicht eines (teilweise transparent dargestellten) Weichbottichs,

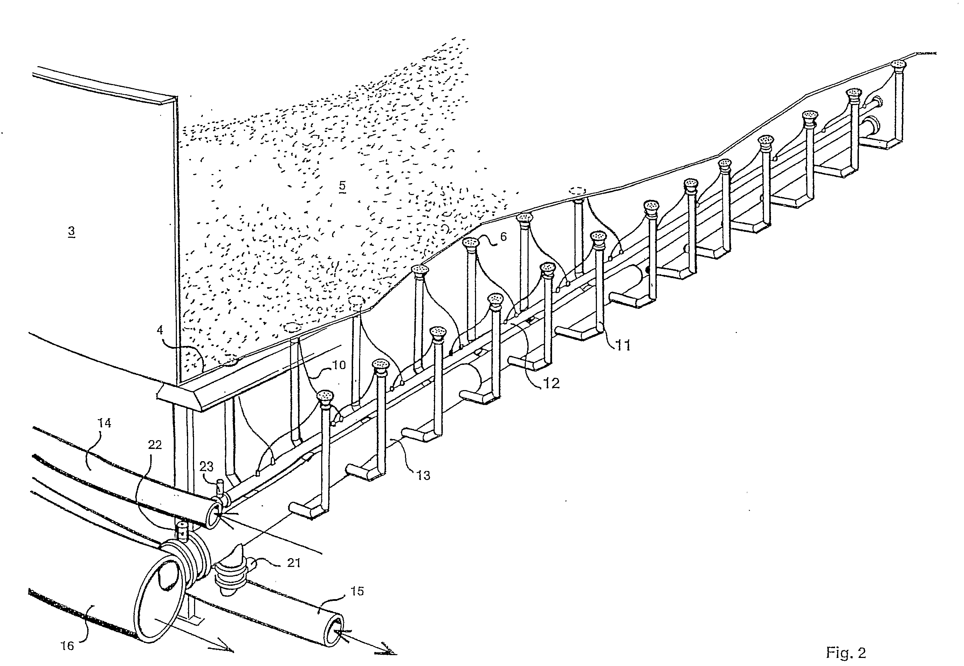

- Figur 2: zeigt eine detailliertere Perspektivansicht eines Teils des Weichbottichs gemäss Figur 1,
- Figur 3: zeigt einen detaillierteren Teil von Figur 2,
- Figur 4: zeigt in Obenansicht ein mögliches Verteilungsmuster von Durchgängen auf dem Boden des Weichbottichs gemäss Figur 1.

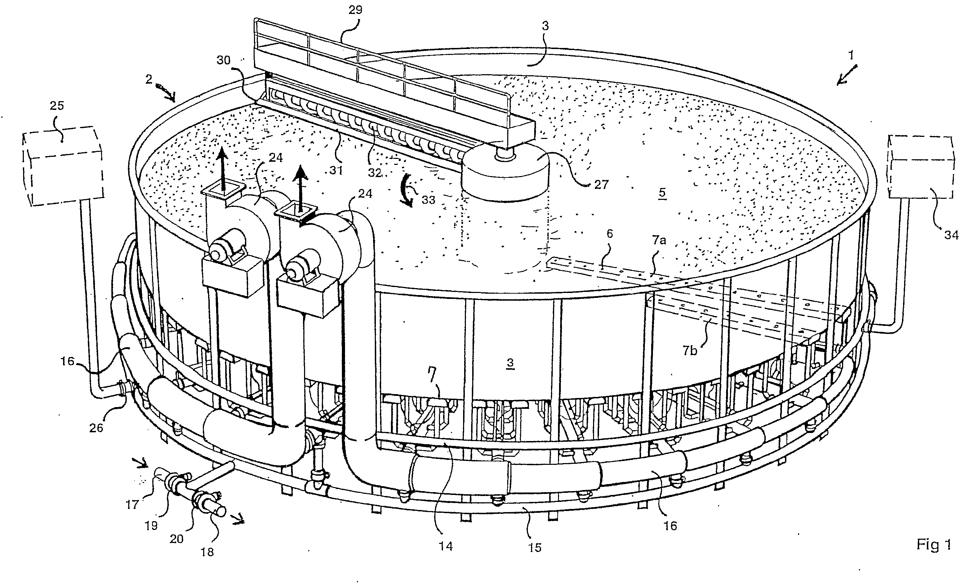

Figur 1 zeigt einen Weichbottich 1 zum Weichen von Gerste für den Vermalzungsprozess zum Beispiel zum Brauen von Bier. Der Weichbottich 1 kann zum Beispiel oben auf einem Malzturm angeordnet sein, was aus logistischem Gesichtspunkt vorteilhaft ist, da die geweichte Gerste anschliessend an das Weichen Anschlussschritten im Malzprozess unterworfen wird.

Der Weichbottich 1 umfasst einen Behälter in der Form eines zylindrischen Behälters 2 mit einer senkrechten Wand 3 und einem auf die Unterseite dieser senkrechten Wand 3 anschliessenden flachen Boden 4 mit einem Durchmesser von 24 Metern. Der Behälter 2 ist dazu bestimmt, über dessen offene Oberseite mit zu weichender Gerste 5 und während der Nassweichphase ausserdem mit Wasser gefüllt zu werden.

Mitten im Behälter 2 befindet sich ein zylindrischer Ständer 27 mit einer zentralen senkrechten Rotationsachse 28 für eine Brücke 29, die sich zwischen dem Ständer 27 und der senkrechten Wand 3 des Behälters 2 erstreckt. Unter der Brücke 29 ist ein gekrümmter Abschabkörper 30 mit dieser verbunden, der mit einer Schabwand 31 versehen ist, die sich in der nassen Weichphase auf dem Niveau der Oberfläche des Wassers im Behälter 2 befindet. In der Mulde des Abschabkörpers 30 ist eine Winde 32 vorgesehen zum Abführen von Material, das vom Schabkörper 30 von der Oberfläche des Wassers in Behälter 2 in die Richtung des Ständers 27 gerecht wird. Der Ständer 27 ist dazu mit nicht näher gezeigten Durchgängen für das Abführen dieses Materials über das Innere des Ständers 27 versehen.

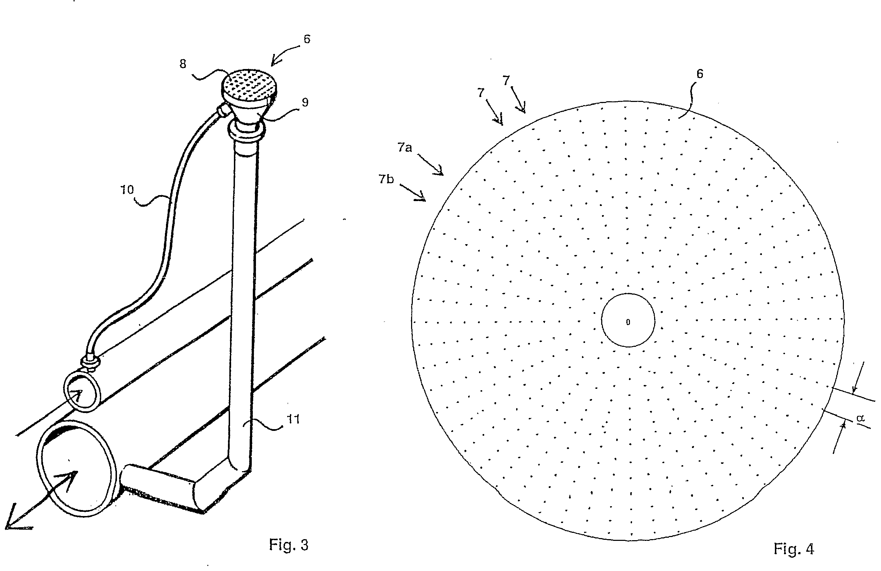

Der Boden 4 des Behälters 2 ist mit einer Anzahl von Durchgängen 6 zum Durchführen von Mitteln wie Wasser, Luft/Sauerstoff und Kohlendioxyd versehen, die beim Weichprozess eine Rolle spielen. Die Durchgänge 6 sind in radialen Reihen 7 (Figur 4) angeordnet, die eine unterschiedliche Länge haben. Insbesondere sind es die langen Reihen 7a, die sich über nahezu den gesamten Radius des Bodens 4 erstrecken und kurze Reihen 7b, die sich nur an der äusseren Hälfte des Radiusses des Bodens 4 erstrecken. Die Durchgänge 6 befinden sich untereinander in jeder radialen Reihe 7 auf mit etwa gleichem Abstand zueinander. Der Winkel, den angrenzende Reihen 7 miteinander bilden, beträgt etwa 6 bis 7 Grad. Der optimale Winkel ist vom Durchmesser des Bodens abhängig. Somit wird ein regelmässiges Muster von Durchgängen 6 gebildet, wobei die Verteilung der Durchgänge 6 über die Fläche des Bodens 4 gleichmässig ist. Die Dichte der Durchgänge 6 ist durchschnittlich etwa 1 Durchgang pro m² Bodenfläche.

Der Durchmesser eines jeden Durchgangs 6 beträgt etwa 10 cm. Um zu vermeiden, dass Gerstenkörner die Durchgänge 6 passieren, sind diese mit Siebmaterial 8 versehen. Die Durchgänge 6 werden von der Oberseite eines kegelförmigen Sammelorgans 9 an der schrägen Seitenwand gebildet, von der eine Luftabzweigleitung 10 anschliesst und auf die zentral in der Mitte an der Unterseite eine kombinierte Anzweigleitung 11 anschliesst. Die Luftabzweigleitung 10 schliesst an der gegenüber dem Sammelorgan 9 gelegenen Seite auf eine gemeinsame Luftleitung 12 an, auf die auch die Luftabzweigleitungen 10, die zu anderen Durchgängen 6 derselben Reihe 7 sowie einer benachbarten Reihe 7 gehören, anschliessen. Die kombinierten Abzweigleitungen, die zu den Durchgängen 6 derselben radialen Reihen 7 gehören, schliessen an ihrer gegenüber dem Sammelorgan 9 gelegenen Seite auf eine gemeinsame kombinierte Leitung 13 an. In Obenansicht befinden sich die verschiedenen gemeinsamen Luftleitungen 12 und die verschiedenen gemeinsamen kombinierten Leitungen 13 zwischen zwei angrenzenden radialen Reihen 7. Wie die Reihen 7 erstrecken sich die gemeinsamen Luftleitungen 12 und die gemeinsamen kombinierten Leitungen 13 daher auch in radiale Richtung, wobei die gemeinsamen Luftleitungen 12 sich über den dazugehörigen gemeinsamen kombinierten Leitungen 13 befinden. Zur Mitte hin nimmt der Durchmesser der gemeinsamen kombinierten Leitungen 13 ab, um auch nahe der Mitte des Bodens 4 ausreichend Druck bewirken zu können, wenn Wasser über die gemeinsamen kombinierten Leitungen 13 den Durchgängen 6 zugeführt wird.

An der Aussenseite des Behälters 2 schliessen die gemeinsamen Luftleitungen 12 auf ein ringförmiges Lufthauptleitungselement 14 an, welches an einen Kompressor 34 angeschlossen ist zum Erhöhen des Drucks innerhalb des Luftleitungswerks, wie dieses vom Lufthauptleitungselement 14, den gemeinsamen Luftleitungen 12 und den Luftabzweigleitungen 10 gebildet ist. Der Luftdruck innerhalb des Luftleitungswerks kann somit auf einen Druck erhöht werden, der höher als der statische Druck ist infolge der Wassersäule (zum Beispiel 0,5 Bar oder grösser), um der Gerste 5 Luft über Durchgänge 6 zuzuführen. Zur Zufuhr von Luft müssen die Luftabsperrventile 23 zwischen den gemeinsamen Luftleitungen 12 und dem Lufthauptleitungselement 14, geöffnet sein.

Die gemeinsamen kombinierten Leitungen 13 schliessen an ihrer Aussenseite auf ein Wasserhauptleitungselement 15 beziehungsweise ein CO₂-Hauptleitungselement 16 an. Wie das Lufthauptleitungselement 14 ist das Wasserhauptleitungselement 15 ringförmig und erstreckt sich rund um den Umfang des Behälters 2 an dessen Unterseite. Im Wasserleitungswerk, wie dieses vom Wasserleitungshauptleitungselement 15, der gemeinsamen kombinierten Leitung 13 und der kombinierten Abzweigleitung 11 gebildet wird, kann über die Zufuhrleitung 17 Wasser zugeführt werden, indem man das Wasserabsperrventil 19 öffnet und das Wasserabsperrventil 20 an die Gerste 5 über Durchgänge 6 anschliesst, während über dasselbe Wasserleitungswerk auch Wasser aus dem Behälter 2 über Durchgänge 6 abgeführt werden kann nach dem Schliessen des Wasserabsperrventils 19 und dem Öffnen des Wasserabsperrventils 20 über Abfuhrleitung 18. Dabei müssen die Wasserabsperrventile 21 zwischen den gemeinsamen kombinierten Leitungen 13 und dem Wasserhauptleitungselement 15 dabei geöffnet sein, während die CO₂-Absperrventile 22 zwischen den gemeinsamen kombinierten Leitungen 13 und den CO₂-Hauptleitungselementen 16, geschlossen sein müssen. An das Wasserhauptleitungselement 15 schliesst ein Reservoir 25 über Reinigungsflüssigkeitsabsperrventile 26 an. Im Reservoir 25 ist Reinigungsflüssigkeit wie z.B. Lauge enthalten, die bei geöffnetem Reinigungsflüssigkeitsabsperrventil 26 dem Wasser im Wasserhauptleitungselement 15 zugeführt werden kann.

Insgesamt sind vier CO₂-Hauptleitungselemente 16 vorgesehen, wobei jedes einen Viertelkreis um den Umfang des Behälters 2 bestreicht. Die CO₂-Hauptleitungselemente 16 haben einen zunehmenden Durchmesser, wobei an der Seite des grössten Durchmessers eine Vakuumpumpe 24 vorgesehen ist (siehe Figur 1). Aufgrund der Tätigkeit der Ventilatoren 24 kann über das Kohlenstoffdioxydleitungswerk, wie es von den vier Kohlenstoffdioxydhauptleitungselementen 16 gebildet wird, die gemeinsamen kombinierten Leitungen 13 und die kombinierten Abzweigleitungen 11 CO₂ aus der Gerste 5 abgeführt werden.

Die Anordnung der Durchgänge 6 im Siebmaterial 8 des Bodens 4 ist bevorzugt mittels Strömungssimulation optimiert.

Die Durchgänge 6 sind im Ausführungsbeispiel in den Reihen 7 (und 7a, 7b) angeordnet, wobei diese Reihen zugleich als Tragstützen des Bodens 4 ausgebildet sind und leiten die Bodenlast ab.

Die Durchgänge 6 könnten aber auch zwischen den Reihen 7 angeordnet sein.

Das CO₂-Hauptleitungselemente 16 kann sowohl wie in Fig. 1 dargestellt angeordnet sein als auch näher am Boden 4 bzw. am oberen Rand des Behälters 2.

Neben der Absaugung von CO₂ aus der Gerste 5 über die Durchgänge 6 bzw. Sammelorgane 9 kann über die Luftabzweigleitung 10 auch Druckluft in die Gerste 5 eingespeist werden. Jeder Leitungsanschluss ist hierzu mit einem, nicht explizit dargestellten Rückschlagventil zwischen Luftabzweigleitung 10 und Sammelorgan 9 versehen um das Eindringen von Wasser zu verhindern. Die Sanitation wird so verbessert.

Luftabzweigleitungen 10 und Anzweigleitungen 11 sind bevorzugt flexibel resp. elastisch ausgebildet.

Die Sammelorgane 9 sind Teil des Bodens 5 und wie die Löcher im Siebmantel bevorzugt gelasert.

Die kombinierten Leitungen 13 bilden einen Zu- und Ablauf, während die Hauptleitung für die Luftabzweigleitungen 10 nur als Zulauf dient.

Boden 4 und Siebmaterial 8 sind im Beispiel so ausgebildet, dass zwischen den Reihen 7, 7a, 7b Gitterroste angeordnet sind und auf den Reihen 7, 7a, 7b der Boden als Lochblech mit den Sieböffnungen aufliegt.

Der Weichbottich 1 funktioniert wie folgt: Ausgehend von einem ungefüllten Zustand des Behälters 2 wird Gerste 5 in den Behälter 2 gebracht. Anschliessend wird über das Wasserleitungswerk der Gerste 5 Wasser über die Durchgänge 6 zugeführt, so dass die Gerste 5 sich vollständig im Wasser befindet. Dieser Zustand der Nassweichphase wird während einiger Stunden, zum Beispiel zwei oder drei Stunden, beibehalten. Dank der Anordnung der Durchgänge 6 in radialen Reihen 7 und der Anwendung von separaten Luftabsperrventilen 23 pro Reihe, die von einem nicht näher gezeigten Steuerungssystem individuell geöffnet und geschlossen werden können, ist es während der Nassweichphase möglich, während der Rotation des Abschabkörpers 30 in Rotationsrichtung 33 in Obenansicht direkt vorangehend an Abschabkörper 30 selektiv Reihen 7 mit Luft zu versehen, so dass Schmutz dort lokal in erhöhtem Masse nach oben schwimmt und über den Schabrand 31 durch die Winde 32 abgeführt werden kann.

Nach der Weichphase lässt man das Wasser über Durchgänge 6 wieder aus dem Behälter 2 ablaufen, indem man das Wasserabsperrventil 20 öffnet. Die Gerste 5 kommt dann mehr oder weniger trocken zu liegen während der sogenannten Trockenweichphase. Während dieser Trockenweichphase, die zum Beispiel fünf Stunden dauert, quellen die Gerstenkörner und atmen schneller, wozu einerseits die Gerstenkörner Sauerstoff aufnehmen und andererseits die Gerstenkörner CO₂ abgeben. Um diesen Prozess in Gang zu halten, wird Sauerstoff als Teil der Luft der Gerste über das Sauerstoffleitungswerk zugeführt, während andererseits das CO₂ von der Gerste über Ventilatoren 24 bei geöffneten CO₂-Absperrventilen 22 und geschlossenem Stand des Wasserabsperrventils 21 abgesaugt wird. Dabei sind, dass die kombinierten Abzweigleitungen 11 und die gemeinsamen kombinierten Leitungen 13 sowohl für das Zu- und Abführen von Wasser sowie für das Absaugen von CO₂ verwendet werden. Die Nassweichphase und die Trockenweichphase wie oben können einander einige Male abwechseln bis das Weichen in ausreichendem Masse stattgefunden hat und die geweichte Gerste sich für den Malzprozess eignet.

Für die Reinigung des Weichbottichs 1 und vor allem die Reinigung des Wasserleitungswerks kann dieses Wasserleitungswerk mit Wasser durchgespült werden, dem Reinigungsflüssigkeit aus dem Reservoir 25 zugefügt wurde. Dabei können aufgrund der Art des Leitungswerks relativ hohe Fliessgeschwindigkeiten der Reinigungsflüssigkeit realisiert werden, wodurch die Reinigung effektiv stattfinden kann, während ausserdem aufgrund der beschränkten Menge des Wasserleitungswerks die benötigte Menge Reinigungsflüssigkeit beschränkt bleibt. Es wird dem Fachmann klar sein, dass auf diese Weise auch die Durchgänge 6 und vor allem deren Siebmaterialien 8 und der Boden 4 der Wirkung der Reinigungsflüssigkeit ausgesetzt werden können, wozu es übrigens nur notwendig ist, eine dünne Schicht Reinigungsflüssigkeit auf den Boden 4 zu geben. Die Effizienz, mit der die Reinigung stattfindet, kann weiter durch Belüftung der Reinigungsflüssigkeit wesentlich erhöht werden, wodurch die Reinigungsflüssigkeit in Bewegung gebracht wird.

**Bezugszeichen**

| | | | |
|---|---|---|---|
| 1 | Weichbottich | 17 | Zufuhrleitung |
| 2 | Behälter | 18 | Abfuhrleitung |
| 3 | Wand | 19 | Wasserabsperrventil |
| 4 | Boden | 20 | Wasserabsperrventil |
| 5 | Gerste | 21 | Wasserabsperrventil |
| 6 | Durchgang | 22 | CO₂-Absprerrventil |
| 7 | Reihe | 23 | Luftabsperrventil |
| 7a | lange Reihe | 24 | Vakuumpumpe |
| 7b | kurze Reihe | 25 | Reservoir |
| 8 | Siebmaterial | 26 | Reinigungsflüssigkeitabsperrventil |
| 9 | Sammelorgan | 27 | Ständer |
| 10 | Luftabzweigleitung | 28 | Rotationsachse |
| 11 | Anzweigleitung | 29 | Brücke |
| 12 | Luftleitung | 30 | Abschabkörper |
| 13 | kombinierte Leitung | 31 | Schabwand |
| 14 | Lufthauptleitungselement | 32 | Winde |
| 15 | Wasserhauptleitungselement | 33 | Rotationsrichtung |
| 16 | CO₂-Hauptleitungselement | | |

## Patentansprüche

1. Vorrichtung zum Weichen von Gerste, umfassend einen Behälter (2) für zu weichende Gerste mit einem Boden (4), in dem Durchgänge (6) zum Durchführen von Wasser zwischen der Unterseite des Bodens (4) und der zu weichenden Gerste im Behälter (2) vorgesehen sind, **dadurch gekennzeichnet, dass** unter dem Boden (4) ein Wasserleitungswerk (11, 13, 15) direkt an Durchgänge (6) zum Durchführen von Wasser oder/und Gasen über diese Durchgänge (6) anschliesst, wobei die Vorrichtung heinen doppelten Boden aufweist.

2. Vorrichtung nach Anspruch 1, **dadurch gekennzeichnet, dass** das Wasserleitungswerk (11, 13, 15) geeignet ist, über die Durchgänge (6) Wasser von der zu weichenden Gerste (5) abzuführen.

3. Vorrichtung nach Anspruch 1 oder Anspruch 2, **dadurch gekennzeichnet, dass** das Wasserleitungswerk (11, 13, 15) so ausgerichtet ist, über die Durchgänge (6) Wasser zu der zu weichenden Gerste (5) ab der Unterseite des Bodens (4) zuzuführen.

4. Vorrichtung nach Anspruch 1, 2 oder 3, **dadurch gekennzeichnet, dass** die Durchgänge (6) mit Sieborganen (8) versehen sind.

5. Vorrichtung nach Anspruch 1, 2, 3 oder 4, **dadurch gekennzeichnet, dass** der Behälter (2) in Obenansicht eine runde Form aufweist, wobei die Durchgänge (6) in radial orientierten Reihen (7, 7a, 7b) angeordnet sind.

6. Vorrichtung nach Anspruch 5, **dadurch gekennzeichnet, dass** angrenzende radial orientierte Reihen (7, 7a, 7b) eine unterschiedliche Länge aufweisen.

7. Vorrichtung nach einem der vorhergehenden Ansprüche, **dadurch gekennzeichnet, dass** das Wasserleitungswerk (11, 13, 15) unter dem Boden (4) mit einer Anzahl von gemeinsamen Wasserleitungselementen und Wasserabzweigleitungselementen zwischen einem gemeinsamen Wasserleitungselement (13) und einem Durchgang (6) versehen ist.

8. Vorrichtung nach Anspruch 5 oder 6 und nach Anspruch 7, **dadurch gekennzeichnet, dass** die gemeinsamen Wasserleitungselemente (13) radial orientiert sind.

9. Vorrichtung nach Anspruch 8, **dadurch gekennzeichnet, dass** die gemeinsamen Wasserleitungselemente (13) in Obenansicht zwischen zwei angrenzenden radial orientierten Reihen (7) von Durchgängen (6) orientiert sind.

10. Vorrichtung nach einem der Ansprüche 7 bis 9, **dadurch gekennzeichnet, dass** eine Anzahl von gemeinsamen Wasserleitungselementen (13) an ein Wasserhauptleitungselement (15) anschliessen.

11. Vorrichtung nach mindestens einem der vorhergehenden Ansprüche, **dadurch gekennzeichnet, dass** ein Reservoir (25) für Reinigungsmittel vorgesehen ist, das über ein Reinigungsmittelabsperrorgan (26) in Verbindung mit dem Wasserleitungswerk (11, 13, 15) steht, um dem Wasserleitungswerk (11, 13, 15) Reinigungsmittel zuzuführen.

12. Vorrichtung nach mindestens einem der vorhergehenden Ansprüche, **dadurch gekennzeichnet, dass** unter dem Boden (4) ein CO₂-Leitungswerk direkt an Durchgänge (6) zum Abführen von CO₂ von der zu weichenden Gerste (5) über diese Durchgänge (6) anschliesst.

13. Vorrichtung nach Anspruch 12, **dadurch gekennzeichnet, dass** das CO₂-Leitungswerk unter dem Boden (4) mit einer Anzahl von gemeinsamen CO₂-Leitungselementen (13) und CO₂-Abzweigleitungselementen zwischen einem gemeinsamen CO₂-Leitungselement (16) und einem Durchgang (6) versehen ist.

14. Vorrichtung nach Anspruch 13, **dadurch gekennzeichnet, dass** eine Anzahl von gemeinsamen CO₂-Leitungselementen (13) an ein CO₂-Hauptleitungselement (16) anschliesst.

15. Vorrichtung nach Anspruch 6 oder einen davon abhängigen Anspruch und nach Anspruch 13 oder einen davon abhängigen Anspruch, **dadurch gekennzeichnet, dass** die gemeinsamen Wasserleitungseiemente (13) und die gemeinsamen CO₂-Leitungselemente (13) mindestens zum Teil von denselben gemeinsamen Leitungselementen gebildet werden.

16. Vorrichtung nach Anspruch 6 oder einen davon abhängigen Anspruch und nach Anspruch 13 oder einen davon abhängigen Anspruch, **dadurch gekennzeichnet, dass** die Wasserabzweigleitungselemente (11) und die CO₂-Abzweigleitungselemente (11) mindestens zum Teil von denselben Abzweigleitungselementen gebildet werden.

17. Vorrichtung nach Anspruch 9 oder einen davon abhängigen Anspruch und nach Anspruch 15 oder einen davon abhängigen Anspruch, **dadurch gekennzeichnet, dass** zwischen den gemeinsamen Leitungselementen (13) und dem Wasserhauptleitungselement (15) Wasserabsperrventile (19, 20, 21) vorgesehen sind.

18. Vorrichtung nach Anspruch 14 oder einem davon abhängigen Anspruch und nach Anspruch 15 oder einen davon abhängigen Anspruch, **dadurch gekennzeichnet, dass** zwischen den gemeinsamen Leitungselementen (13) und dem CO₂-Hauptleitungselement (16) CO₂-Absperrorgane (22) vorgesehen sind.

19. Vorrichtung nach einem der vorhergehenden Ansprüche, **dadurch gekennzeichnet, dass** unter dem Boden (4) ein Luftleitungswerk an Durchgänge (6) anschliesst um durch diese Durchgänge (6) der zu weichenden Gerste (5) Luft zuzuführen.

20. Vorrichtung nach Anspruch 19, **dadurch gekennzeichnet, dass** das Luftleitungswerk, vorzugsweise unter dem Boden (4) mit einer Anzahl von gemeinsamen Luftleitungselementen (12) und Luftabzweigleitungselementen (10) zwischen einem gemeinsamen Luftleitungselement (12) und einem Durchgang (6) versehen ist.

21. Vorrichtung nach Anspruch 20, **dadurch gekennzeichnet, dass** eine Anzahl von gemeinsamen Luftleitungselementen (12) auf ein Lufthauptleitungselement (14) anschliesst.

22. Vorrichtung nach Anspruch 21, **dadurch gekennzeichnet, dass** zwischen den gemeinsamen Luftleitungselementen (12) und dem Lufthauptleitungselement (14) Luftabsperrventile (23) vorgesehen sind.

23. Vorrichtung nach Anspruch 22, **dadurch gekennzeichnet, dass** ein Steuerungssystem vorgesehen ist, welches zur individuellen oder gruppenweisen Bedienung der verschiedenen Luftabsperrventile (23) geeignet ist.

24. Vorrichtung nach einem der vorhergehenden Ansprüche, **dadurch gekennzeichnet, dass** der Behälter (2) nahe von dessen Oberseite mit einem Abschaborgan versehen ist, um während der Verlagerung des Abschabkörper (30) in eine Verlagerungsrichtung entlang der Oberfläche des Wassers auf dem Wasser treibende Elemente abzuschaben resp. einzusammeln

25. Vorrichtung nach Anspruch 23 und nach Anspruch 24, **dadurch gekennzeichnet, dass** das Steuerungssystem zum Öffnen eines oder einer Anzahl von Luftabsperrventile (23), die sich in Obenansicht in die Verlagerungsrichtung an der Vorderseite des Abschabkörpers (30) befinden, geeignet ist.

26. Vorrichtung nach mindestens einem der Ansprüche 1 bis 25, **dadurch gekennzeichnet, dass** der Boden (4) eine teilweise offene, gasdurchlässige Fläche beinhaltet deren Anteil weniger als 5% der Gesamtfläche beträgt.

27. Vorrichtung nach mindestens einem der Ansprüche 1 bis 26, **dadurch gekennzeichnet, dass** der Anteil der offenen Fläche weniger als 3% beträgt.

28. Vorrichtung nach mindestens einem der Ansprüche 1 bis 27, **dadurch gekennzeichnet, dass** die Leitungswerke abgestuft sind.

29. Vorrichtung nach mindestens einem der Ansprüche 1 bis 28, **dadurch gekennzeichnet, dass** die Leitungswerke unterhalb oder auf Höhe des Bodens (4) nach aussen geführt sind.

## Claims

1. A device for steeping barley, comprising a container (2) for barley to be steeped, with a floor (4) in which passageways (6) are provided for passing water between the underside of the floor (4) and the barley to be steeped in the container (2), **characterized in that** below the floor (4) a water line system (11, 13, 15) is directly connected to passageways (6) for feeding water and/or gases through these passageways (6), wherein the device does not have a double floor.

2. The device according to claim 1, **characterized in that** the water line system (11, 13, 15) is suitable for discharging water from the barley (5) to be steeped through the passageways (6).

3. The device according to claim 1 or claim 2, **characterized in that** the water line system (11, 13, 15) is aligned in such a manner that it supplies water to the barley (5) to be steeped through the passageways (6) starting from the underside of the floor (4).

4. The device according to claim 1, 2 or 3, **characterized in that** the passageways (6) are provided with sieves (8).

5. The device according to claim 1, 2, 3 or 4, **characterized in that** the container (2) has a round shape when viewed from above, wherein the passageways (6) are arranged in radially orientated rows (7, 7a, 7b).

6. The device according to claim 5, **characterized in that** adjacent radially orientated rows (7, 7a, 7b) have a varying length.

7. The device according to any one of the preceding claims, **characterized in that** the water line system (11, 13, 15) is provided under the floor (4) with a number of shared water line elements and water branch line elements between a shared water line element (13) and a passageway (6).

8. The device according to claim 5 or 6 and according to claim 7, **characterized in that** the shared water line elements (13) are radially orientated.

9. The device according to claim 8, **characterized in that** the shared water line elements (13) are oriented between two adjacent, radially oriented rows (7) of passageways (6) when viewed from above.

10. The device according to any one of claims 7 to 9, **characterized in that** a number of shared water line elements (13) are connected to a water main line element (15).

11. The device according to at least one of the preceding claims, **characterized in that** a reservoir (25) is provided for cleaning agents, which is connected by a cleaning agent shutoff mechanism (26) to the water line system (11, 13, 15) to supply cleaning agent to the water line system (11, 13, 15).

12. The device according to at least one of the preceding claims, **characterized in that** a CO₂ line system is connected under the floor (4) directly to passageways (6) for removing CO₂ from the barley (5) to be steeped through these passageways (6).

13. The device according to claim 12, **characterized in that** the CO₂ line system is provided under the floor (4) with a number of shared CO₂ line elements (13) and CO₂ branch line elements between a shared CO₂ line element (16) and a passageway (6).

14. The device according to claim 13, **characterized in that** a number of shared CO₂ line elements (13) are connected to a CO₂ main line element (16).

15. The device according to claim 6 or a claim dependent thereon and according to claim 13 or a claim dependent thereon, **characterized in that** the shared water line elements (13) and shared CO₂ line elements (13) are formed at least in part by the same shared line elements.

16. The device according to claim 6 or a claim dependent thereon and according to claim 13 or a claim dependent thereon, **characterized in that** the water branch line elements (11) and the CO₂ branch line elements (11) are formed at least in part by the same branch line elements.

17. The device according to claim 9 or a claim dependent thereon and according to claim 15 or a claim dependent thereon, **characterized in that** water shutoff valves (19, 20, 21) are provided between the shared line elements (13) and the water main line element (15).

18. The device according to claim 14 or a claim dependent thereon and according to claim 15 or a claim dependent thereon, **characterized in that** CO₂ shutoff mechanisms (22) are provided between the shared line elements (13) and the CO₂ main line element (16).

19. The device according to any one of the preceding claims, **characterized in that** an air line system is connected under the floor (4) to passageways (6) in order to pass air to the barley (5) to be steeped through these passageways (6).

20. The device according to claim 19, **characterized in that** the air line system is provided with a number of shared air line elements (12) and air branch line elements (10) between a shared air line element (12) and a passageway (6), preferably under the floor (4).

21. The device according to claim 20, **characterized in that** a number of shared air line elements (12) is connected to an air main line element (14).

22. The device according to claim 21, **characterized in that** air shutoff valves (23) are provided between the shared air line elements (12) and the air main line element (14).

23. The device according to claim 22, **characterized in that** a control system is provided that is suitable for the individual or group operation of various air shutoff valves (23).

24. The device according to any one of the preceding claims, **characterized in that** the container (2) is provided near its upper side with a scraper in order to scrape or collect, respectively, elements circulating on the water as the scraper body (30) shifts in a displacement direction along the surface of the water.

25. The device according to claim 23 and claim 24, **characterized in that** the control system is suitable for opening one or a plurality of air shutoff valves (23) that are located on the front side of the scraper body (30) viewed from above in the displacement direction.

26. The device according to at least one of claims 1 to 25, **characterized in that** the floor (4) has a partially open, gas-permeable surface constituting less than 5% of the overall surface.

27. The device according to at least one of claims 1 to 26, **characterized in that** the percentage of open surface measures less than 3%.

28. The device according to at least one of claims 1 to 27, **characterized in that** the line systems are stepped.

29. The device according to at least one of claims 1 to 28, **characterized in that** the line systems are routed to the outside under or at floor (4) level.

## Revendications

1. Dispositif pour le trempage de l'orge, comprenant une cuve (2) pour l'orge à tremper avec un fond (4) où sont prévues des traversées (6) pour le passage d'eau entre le dessous du fond (4) et l'orge à tremper dans la cuve (2), **caractérisé en ce qu'**un système de conduites d'eau (11, 13, 15) sous le fond (4) est directement raccordé aux traversées (6) pour le passage d'eau et/ou de gaz par lesdites traversées (6), ledit dispositif ne présentant pas de double fond.

2. Dispositif selon la revendication 1, **caractérisé en ce que** le système de conduites d'eau (11, 13, 15) est adapté pour évacuer l'eau de l'orge à tremper (5) par les traversées (6).

3. Dispositif selon la revendication 1 ou la revendication 2, **caractérisé en ce que** le système de conduites d'eau (11, 13, 15) est prévu pour amener l'eau vers l'orge à tremper (5) par les traversées (6) depuis le dessous du fond (4).

4. Dispositif selon la revendication 1, 2 ou 3, **caractérisé en ce que** les traversées (6) sont pourvues d'organes de tamisage (8).

5. Dispositif selon la revendication 1, 2, 3 ou 4, **caractérisé en ce que** la cuve (2) vue de dessus a une forme ronde, les traversées (6) étant disposées en rangées à orientation radiale (7, 7a, 7b).

6. Dispositif selon la revendication 5, **caractérisé en ce que** des rangées à orientation radiale (7, 7a, 7b) contiguës sont de longueur différente.

7. Dispositif selon l'une des revendications précédentes, **caractérisé en ce que** le système de conduites d'eau (11, 13, 15) est pourvu sous le fond (4) d'une pluralité d'éléments de conduite d'eau communs et d'éléments de conduites de dérivation entre un élément de conduite d'eau commun (13) et une traversée (6).

8. Dispositif selon la revendication 5 ou la revendication 6 et selon la revendication 7, **caractérisé en ce que** les éléments de conduite d'eau communs (13) sont à orientation radiale.

9. Dispositif selon la revendication 8, **caractérisé en ce que** les éléments de conduite d'eau communs (13) vus de dessus entre deux rangées de traversées (6) à orientation radiale (7) contiguës.

10. Dispositif selon l'une des revendications 7 à 9, **caractérisé en ce qu'**une pluralité d'éléments de conduite d'eau communs (13) est raccordée à un élément principal de conduite d'eau (15).

11. Dispositif selon au moins une des revendications précédentes, **caractérisé en ce qu'**un réservoir (25) est prévu pour un agent de nettoyage, lequel est relié au système de conduites d'eau (11, 13, 15) par un organe d'arrêt d'agent de nettoyage (26) pour amener un agent de nettoyage au système de conduites d'eau (11, 13, 15).

12. Dispositif selon au moins une des revendications précédentes, **caractérisé en ce qu'**un système de conduites de CO₂ est directement raccordé à des traversées (6) sous le fond (4) pour l'évacuation de CO₂ de l'orge à tremper (5) par lesdites traversées (6).

13. Dispositif selon la revendication 12, **caractérisé en ce que** le système de conduites de CO₂ est pourvu sous le fond (4) d'une pluralité d'éléments de conduite de CO₂ communs (13) et d'éléments de conduites de dérivation de CO₂ entre un élément de conduite de CO₂ commun (16) et une traversée (6).

14. Dispositif selon la revendication 13, **caractérisé en ce qu'**une pluralité d'éléments de conduite de CO₂ communs (13) est raccordée à un élément principal de conduite de CO₂ (16).

15. Dispositif selon la revendication 6 ou une revendication dépendante de celle-ci et selon la revendication 13 ou une revendication dépendante de celle-ci, **caractérisé en ce que** les éléments de conduite d'eau communs (13) et les éléments de conduite de CO₂ communs (13) sont formés au moins en partie des mêmes éléments de conduite communs.

16. Dispositif selon la revendication 6 ou une revendication dépendante de celle-ci et selon la revendication 13 ou une revendication dépendante de celle-ci, **caractérisé en ce que** les éléments de conduites de dérivation d'eau (11) et les éléments de conduites de dérivation de CO₂ (11) sont formés au moins en partie des mêmes éléments de conduites de dérivation.

17. Dispositif selon la revendication 9 ou une revendication dépendante de celle-ci et selon la revendication 15 ou une revendication dépendante de celle-ci, **caractérisé en ce que** des vannes d'arrêt d'eau (19, 20, 21) sont prévues entre les éléments de conduite communs (13) et l'élément principal de conduite d'eau (15).

18. Dispositif selon la revendication 14 ou une revendication dépendante de celle-ci et selon la revendication 15 ou une revendication dépendante de celle-ci, **caractérisé en ce que** des organes d'arrêt de CO₂ (22) sont prévus entre les éléments de conduite communs (13) et l'élément principal de conduite de CO₂ (16).

19. Dispositif selon l'une des revendications précédentes, **caractérisé en ce qu'**un système de conduites d'air est raccordé à des traversées (6) sous le fond (4) pour amener de l'air vers l'orge à tremper (5) par lesdites traversées (6).

20. Dispositif selon la revendication 19, **caractérisé en ce que** le système de conduites d'air, est pourvu préférentiellement sous le fond (4) d'une pluralité d'éléments de conduite d'air communs (12) et d'éléments de conduites de dérivation d'air (10) entre un élément de conduite d'air commun (12) et une traversée (6).

21. Dispositif selon la revendication 20, **caractérisé en ce qu'**une pluralité d'éléments de conduite d'air communs (12) est raccordée à un élément principal de conduite d'air (14).

22. Dispositif selon la revendication 21, **caractérisé en ce que** des vannes d'arrêt d'air (23) sont prévues entre les éléments de conduite d'air communs (12) et l'élément principal de conduite d'air (14).

23. Dispositif selon la revendication 22, **caractérisé en ce qu'**un système de commande est prévu, lequel est adapté à une commande individuelle ou groupée des différentes vannes d'arrêt d'air (23).

24. Dispositif selon l'une des revendications précédentes, **caractérisé en ce que** la cuve (2) est pourvue d'un organe de raclage à proximité de son sommet, pour racler ou rassembler des éléments flottant sur l'eau pendant le déplacement du corps de raclage (30) dans une direction de déplacement à la surface de l'eau.

25. Dispositif selon la revendication 23 et selon la revendication 24, **caractérisé en ce que** le système de commande est adapté pour ouvrir une ou plusieurs vannes d'arrêt d'air (23), se trouvant sur le côté avant du corps de raclage (30) dans la direction de déplacement en vue de dessus.

26. Dispositif selon au moins une des revendications 1 à 25, **caractérisé en ce que** le fond (4) comprend une surface perméable aux gaz partiellement ouverte dont la part représente moins de 5 % de la surface totale.

27. Dispositif selon au moins une des revendications 1 à 26, **caractérisé en ce que** la part de la surface ouverte représente moins de 3 %.

28. Dispositif selon au moins une des revendications 1 à 27, **caractérisé en ce que** les systèmes de conduites sont échelonnés.

29. Dispositif selon au moins une des revendications 1 à 28, **caractérisé en ce que** les systèmes de conduites sont conduits vers l'extérieur en dessous du fond (4) ou à la hauteur de celui-ci.
